# FASCICULE DE BREVET EUROPEEN

(11) **EP 1 451 026 B1**
(45) Date de publication et mention de la délivrance du brevet: **30.07.2008**
(21) Numéro de dépôt: 02802311.7
(22) Date de dépôt: 04.11.2002
(51) Int. Cl.: B60C 11/24

(54) **PROCEDE ET DISPOSITIF DE MESURE DE L'USURE D'UN PNEUMATIQUE MONTE SUR UN VEHICULE**
VERFAHREN UND VORRICHTUNG ZUM MESSEN VON VERSCHLEISS EINES FAHRZEUGMONTIERTEN REIFENS
METHOD AND DEVICE FOR MEASURING WEAR IN RELATION TO A VEHICLE-MOUNTED TYRE

(30) Priorité: 02.11.2001 FR 0114493
(43) Date de publication de la demande: 01.09.2004
(73) Titulaire: Société de Technologie Michelin, 63000 Clermont-Ferrand (FR); Michelin Recherche et Technique S.A., 1763 Granges-Paccot (CH)
(72) Inventeur: ROBERT, Michel, F-63200 Cellule (FR); FONTANIER, Bernard, F-63119 Chateaugay (FR)
(74) Mandataire: Dequire, Philippe Jean-Marie Denis
(86) Numéro de dépôt international: PCT/EP2002/012262
(87) Numéro de publication internationale: WO 2003/037658

(56) Documents cités:
- EP-A- 1 036 674
- DE-A- 19 649 506
- DE-A- 19 930 046
- DE-A- 19 957 645
- GB-A- 2 351 564

## Description

La présente invention concerne un procédé de mesure de l'usure d'une enveloppe de pneumatique équipant un véhicule automobile, en roulage ou à l'arrêt de celui-ci, un dispositif de suspension destiné à équiper un tel véhicule pour la mise en oeuvre de ce procédé, et un véhicule comportant ce dispositif de suspension.

Il est connu de pourvoir de détecteurs d'usure les sculptures de bande de roulement des enveloppes de pneumatique équipant un véhicule automobile, afin de mesurer l'usure de ces enveloppes en roulage.

Le document de brevet allemand DE-A-197 45 734 divulgue (voir Figs. 2 et 3) un pneumatique dont la bande de roulement comporte dans sa masse une pluralité de fils métalliques qui forment des boucles électriquement conductrices s'étendant respectivement à des hauteurs différentes à l'intérieur d'une barette de sculpture de cette bande de roulement et qui sont reliés à un circuit de détection en dessous de ladite barette. Lors du roulage d'un véhicule équipé de ce pneumatique, ces boucles sont coupées l'une après l'autre pour former des interrupteurs ouverts, et le circuit de détection délivre un signal représentatif de ces coupures à une unité d'évaluation présente dans le véhicule.

Un inconvénient majeur de ce détecteur d'usure réside dans la complexité de fabrication de l'enveloppe qui l'incorpore dans sa masse, ainsi que dans les altérations possibles des composants de ce détecteur du fait des contraintes mécaniques et de l'échauffement qui sont inhérents au roulage de l'enveloppe.

Les documents DE 199 57 645 A1 et DE 196 49 506 AI présentent des dispositifs de suivi de l'usure de pneumatiques en roulage correspondant au préambule de la revendication 1 et basés sur des procédés électromagnétiques.

Un but de la présente invention est de proposer un procédé de mesure de l'usure d'une enveloppe de pneumatique qui comporte une bande de roulement comportant des éléments de sculpture reliés entre eux par des sillons et qui est montée sur une roue équipant un véhicule automobile, lequel comporte un châssis et un dispositif de suspension assurant une liaison flexible entre ledit châssis et ladite roue, qui remédie à cet inconvénient et permette de mesurer l'usure à tout moment, que ce soit en continu lors du roulage du véhicule ou bien à l'arrêt.

A cet effet, le procédé de mesure de l'usure selon l'invention est tel qu'il consiste, en roulage ou à l'arrêt dudit véhicule :
i) à effectuer à un instant donné une mesure d'une valeur représentative de la distance entre, d'une part, un premier point solidaire dudit dispositif de suspension qui fait face à ladite enveloppe et qui occupe une position ou une pluralité de positions telles que la projection orthogonale dudit premier point sur le plan circonférentiel médian de ladite enveloppe reste à égale distance de celle de l'axe de ladite roue sur ledit plan, ou un second point solidaire dudit châssis qui fait face à ladite enveloppe, et, d'autre part, le sommet de l'un au moins desdits éléments de sculpture en regard dudit premier ou second point,
ii) soit, dans un premier cas, à effectuer audit instant donné une mesure d'une valeur de référence représentative d'une distance mesurée entre ledit premier ou second point et le fond de l'un desdits sillons en regard dudit premier ou second point, soit, dans un second cas, à effectuer ultérieurement une mesure d'une autre valeur de référence représentative d'une distance mesurée entre ledit premier point et l'un desdits sommets, et
iii) à comparer la valeur mesurée au paragraphe i) à la valeur de référence mesurée au paragraphe ii) pour en déduire, dans ledit premier cas, une information d'usure représentative de la hauteur dudit élément de sculpture par mesure différentielle audit instant, et, dans ledit second cas, une information d'usure représentative de l'évolution de l'usure du sommet dudit élément dans un intervalle de temps donné.

Selon un premier mode de réalisation de l'invention, ledit procédé consiste :
i) à effectuer à un instant donné la mesure d'une valeur représentative de la distance entre ledit premier point solidaire dudit dispositif de suspension et le sommet de l'un au moins desdits éléments de sculpture en regard dudit premier point,
ii) soit, dans un premier cas, à effectuer audit instant donné la mesure d'une valeur de référence représentative d'une distance mesurée entre ledit premier point et le fond de l'un desdits sillons en regard dudit premier point, soit, dans un second cas, à effectuer ultérieurement la mesure d'une autre valeur de référence représentative d'une distance mesurée entre ledit premier point et l'un desdits sommets, et
iii) à comparer la valeur mesurée au paragraphe i) à la valeur de référence mesurée au paragraphe ii) pour en déduire, dans ledit premier cas, l'information d'usure représentative de la hauteur dudit élément de sculpture par mesure différentielle audit instant, et, dans ledit second cas, l'information d'usure représentative de l'évolution de l'usure du sommet dudit élément dans un intervalle de temps donné.

Selon un second mode de réalisation de l'invention, ledit procédé consiste :
i) à effectuer à un instant donné la mesure d'une valeur représentative de la distance entre ledit second point solidaire dudit châssis et le sommet de l'un au moins desdits éléments de sculpture en regard dudit second point,
ii) à effectuer audit instant donné la mesure d'une valeur de référence représentative d'une distance mesurée entre ledit second point et le fond de l'un desdits sillons en regard dudit second point, et
iii) à comparer la valeur mesurée au paragraphe i) à la valeur de référence mesurée au paragraphe ii) pour en déduire l'information d'usure représentative de la hauteur dudit élément de sculpture par mesure différentielle audit instant.

Selon un autre aspect de l'invention, ledit procédé consiste :
i) à effectuer à un instant donné une mesure d'une valeur représentative de la distance entre, d'une part, ledit premier point solidaire dudit dispositif de suspension ou ledit second point solidaire dudit châssis et, d'autre part, le sommet de l'un au moins desdits éléments de sculpture en regard dudit premier ou second point,
ii) à effectuer audit instant donné une mesure de la valeur de référence représentative d'une distance mesurée entre ledit premier ou second point et le fond de l'un desdits sillons en regard dudit premier ou second point, et
iii) à comparer la valeur mesurée au paragraphe i) à la valeur de référence mesurée au paragraphe ii) pour en déduire l'information d'usure représentative de la hauteur dudit élément de sculpture par mesure différentielle audit instant.

Selon cet aspect de l'invention, ledit procédé consiste par exemple, à un ou à chaque instant, à :
- émettre à partir dudit premier ou second point un faisceau incident d'ondes acoustiques ou électromagnétiques (telles que des ultrasons ou des ondes lumineuses, respectivement) en direction de l'un au moins desdits sillons en regard et de l'un au moins desdits sommets qui lui est adjacent,
- à réceptionner sous forme de signaux, respectivement, d'une part, un premier faisceau d'ondes réfléchies par ledit sommet en provenance dudit faisceau incident et, d'autre part, un second faisceau d'ondes réfléchies par ledit fond de sillon en provenance dudit faisceau incident,
- à déduire du décalage entre lesdits signaux le temps de retard du signal correspondant audit second faisceau par rapport au signal correspondant audit premier faisceau, et
- à en déduire la distance entre ledit sommet et ledit fond de sillon représentant la hauteur dudit ou desdits éléments de sculpture audit ou à chaque instant.

Egalement selon cet aspect de l'invention, ledit procédé consiste avantageusement à utiliser pour lesdites ondes des ondes acoustiques, telles que des ultrasons.

Egalement selon cet aspect de l'invention, ledit procédé consiste :
- à effectuer, d'une manière continue sur au moins une révolution de ladite enveloppe lors du roulage dudit véhicule, d'une part, n mesures (n > 1) représentatives des distances entre ledit premier ou second point et les sommets respectifs de plusieurs desdits éléments en regard et, d'autre part, n mesures de référence représentatives des distances entre ledit premier ou second point et le fond des sillons adjacents auxdits éléments,
- à effectuer n comparaisons entre ces mesures pour en déduire, par des mesures différentielles, n informations instantanées d'usure représentatives de la hauteur desdits éléments de sculpture, et
- à réaliser une moyenne de ces n informations instantanées d'usure pour en déduire une information relative à l'usure moyenne en roulage de ladite enveloppe sur toute sa circonférence.

Selon un exemple de réalisation dudit premier mode selon l'invention, ledit procédé consiste en outre à déplacer ledit premier point solidaire dudit dispositif de suspension selon une direction perpendiculaire audit plan circonférentiel médian de l'enveloppe, pour mesurer l'usure d'une pluralité d'éléments de sculpture dans la direction axiale de ladite enveloppe.

Selon une autre caractéristique dudit premier mode selon l'invention, ledit premier point est solidaire d'un bras de suspension dudit dispositif de suspension.

Selon une autre caractéristique dudit premier mode selon l'invention, ledit premier point est solidaire d'une butée sur laquelle prend appui un ressort amortisseur dudit bras de suspension.

Selon un exemple de réalisation commun auxdits premier ou second modes selon l'invention, ledit procédé consiste à mesurer lesdites valeurs représentatives de distances par l'intermédiaire d'une jauge d'usure, telle qu'une pige, qui est montée sur ledit premier ou second point, en commandant un déplacement de ladite jauge qui est tel qu'elle entre en contact avec l'un desdits sommets et/ou avec ledit fond, et en ce qu'il consiste alors à mesurer le déplacement de ladite jauge et à comparer ledit déplacement à un déplacement de référence, pour en déduire une information d'usure dudit ou desdits éléments de sculpture.

On notera que l'on pourrait également utiliser des jauges d'usure autres que des piges, par exemple des « peignes » dont la face destinée à entrer en contact avec la bande de roulement présenterait un profil épousant sensiblement celui de cette dernière.

Un autre but de la présente invention est de proposer des unités de mesure de l'usure pour la mise en oeuvre de ce procédé de mesure de l'usure selon l'invention, chacun de ces unités de mesure de l'usure étant destinées à équiper un véhicule automobile comportant un châssis et des roues pourvues chacune d'une enveloppe de pneumatique, laquelle comporte une bande de roulement comportant des éléments de sculpture, et un dispositif de suspension étant destiné à assurer une liaison flexible entre ledit châssis et lesdites roues, qui permettent de remédier aux inconvénients précités lorsqu'ils équipent des véhicules automobiles.

A cet effet une unité de mesure de l'usure selon un premier exemple de réalisation de l'invention comporte une jauge d'usure, telle qu'une pige, ladite jauge étant destinée à être montée sur une butée fixe dudit bras de suspension sur laquelle prend appui un ressort amortisseur, de manière que ladite jauge puisse entrer en contact avec le sommet et/ou le fond de sillon relatifs à l'un au moins desdits éléments de sculpture, sous la commande de moyens de commande également montés sur ledit dispositif de suspension, ladite unité de mesure de l'usure comporte en outre des moyens pour mesurer le déplacement de ladite jauge et comparer ledit déplacement à un déplacement de référence, et pour en déduire une information d'usure dudit ou desdits éléments de sculpture.

A titre de moyens de commande, sont utilisables tous moyens de type électrique, pneumatique, électro-pneumatique ou électromagnétique, notamment, tels que des vérins.

D'autres examples d'unité de mesure de l'usure sont proposés dans les revendications dépendantes. Une unité de mesure de l'usure selon un second exemple de réalisation de l'invention comporte un capteur d'ondes acoustiques ou électromagnétiques, telles que des ultrasons ou des ondes lumineuses, respectivement, ledit capteur étant destiné à être monté en regard desdits éléments de sculpture et étant prévu pour émettre à un ou chaque instant un faisceau incident desdites ondes en direction de l'un au moins desdits sillons en regard et de l'un au moins desdits sommets qui lui est adjacent, ladite unité comporte en outre des moyens :
- pour réceptionner sous forme de signaux, respectivement, d'une part, un premier faisceau d'ondes réfléchies par ledit sommet en provenance dudit faisceau incident et, d'autre part, un second faisceau d'ondes réfléchies par ledit fond de sillon en provenance dudit faisceau incident,
- pour déduire du décalage entre lesdits signaux le temps de retard du signal correspondant audit second faisceau par rapport au signal correspondant audit premier faisceau, et
- pour en déduire la distance entre ledit sommet et ledit fond de sillon représentant la hauteur du ou des éléments de sculpture audit ou à chaque instant.

Avantageusement, une utilisation d'une unité de mesure de l'usure est proposée, où l'une au moins des enveloppes qu'il comporte a tout ou partie de ses sommets d'éléments de sculpture et/ou de ses sillons en forme de surfaces concaves, telles que des paraboloïdes de révolution.

On notera que cette géométrie particulière pour les sommets et/ou les sillons d'enveloppe permet d'optimiser la réflexion par ceux-ci des ondes électromagnétiques ou acoustiques émises par l'unité de mesure selon un mode de réalisation et, par conséquent, la précision des résultats obtenus.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, dans lesquels :
la Fig. 1 est une vue de face, schématique et partielle, illustrant la structure d'un dispositif de suspension pourvu d'une unité selon l'invention pour mesurer l'usure d'une enveloppe de pneumatique,
la Fig. 2 est une vue localement agrandie de la Fig. 1 illustrant la mesure de l'usure par une unité de mesure selon un premier exemple de réalisation de l'invention, dans le cas où la bande de roulement de l'enveloppe est telle que ses éléments de sculpture ne sont pas usés,
la Fig. 3 est une vue localement agrandie de la Fig. 1 illustrant la mesure de l'usure par l'unité de la Fig. 2, dans le cas où la bande de roulement de l'enveloppe est telle que ses éléments de sculpture sont usés, et
la Fig. 4 est une vue schématique illustrant les étapes d'un procédé selon l'invention de mesure de l'usure de cette enveloppe, mis en oeuvre via une unité de mesure selon un second exemple de réalisation de l'invention.

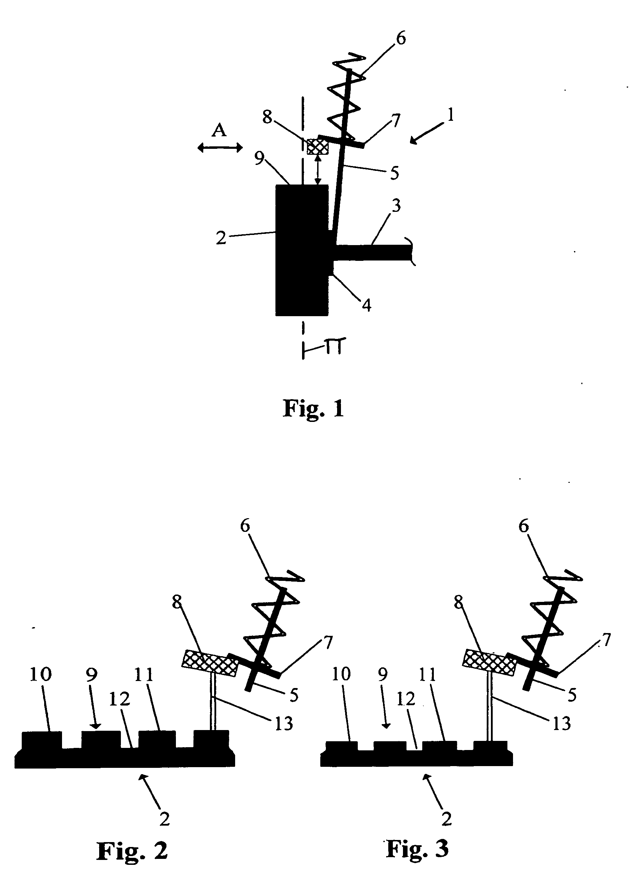

On a représenté à la Fig. 1 un dispositif de suspension 1, destiné à assurer une liaison flexible entre un châssis d'un véhicule automobile (non représenté) et chaque roue dudit véhicule, sur laquelle est montée une enveloppe de pneumatique 2 (la roue correspondante n'est pas visible à la Fig. 1). Est également représenté partiellement à la Fig. 1 un essieu 3 sur lequel est montée ladite roue par l'intermédiaire d'une fusée 4.

Le dispositif de suspension 1 comporte essentiellement un bras de suspension 5 pourvu d'un ressort amortisseur 6 dont le siège prend appui sur une coupelle d'amortisseur 7 formant une butée fixe pour ledit ressort 6 (la butée de choc de ce ressort adjacente au châssis n'est pas représentée).

Selon l'invention, ce dispositif 1 est pourvu d'une unité 8 pour mesurer en continu, lors du roulage, l'usure de l'enveloppe 2. La structure et le fonctionnement de deux exemples de réalisation de cette unité de mesure 8 sont détaillés aux Figs. 2 à 4.

A la Fig. 2 est représentée schématiquement la partie de la bande de roulement 9 de l'enveloppe 2 qui se trouve en regard de l'unité de mesure 8 selon une premier exemple de réalisation de l'invention, lors du roulage de l'enveloppe 2 sur un sol de roulage, et qui se trouve par conséquent à l'opposé dudit sol (non représenté). On peut voir que cette bande de roulement 9 comporte des éléments de sculpture 10 à l'état neuf présentant des sommets 11 reliés entre eux par des sillons 12.

Cette unité de mesure 8 comporte une jauge d'usure 13, telle qu'une pige dans l'exemple de la Fig. 2. Cette jauge 13 est montée solidaire de la coupelle d'amortisseur 7, et elle est adaptée pour pouvoir entrer en contact avec le sommet 11 d'un élément de sculpture 10 se trouvant en regard lors de la rotation de l'enveloppe 2, sous la commande de moyens de commande (non représentés) qui sont également montés sur le bras de suspension 5 et qui sont par exemple constitués de vérins. De plus, des moyens (non représentés) peuvent être prévus pour commander le déplacement de la jauge 13 dans le sens axial de l'enveloppe 2, comme cela est indiqué par la double flèche A à la Fig. 1, de sorte à permettre de mesurer l'usure en des emplacements variables sur toute la largeur de la bande de roulement 9.

L'unité de mesure 8 comporte également des moyens (non représentés) pour mesurer le déplacement de la jauge 13 et comparer ce déplacement à un déplacement de référence, et pour en déduire une information d'usure de l'élément de sculpture 10.

Cette unité de mesure 8 comporte en outre des moyens pour communiquer les informations d'usure du ou des éléments de sculpture 10 à une unité centrale (non représentée) prévue dans l'habitacle du véhicule.

L'unité de mesure 8 de la Fig. 2 peut par exemple fonctionner de la manière suivante.

Afin de connaître en cours de roulage le degré d'usure d'une enveloppe 2 équipant son véhicule, le conducteur de ce véhicule actionne les moyens de commande pour qu'ils commandent le déplacement de la jauge d'usure 13 en direction d'un sommet 11 d'élément de sculpture 10 de cette enveloppe 2.

L'unité 8 mesure le déplacement relatif de la jauge 13 (voir Fig. 3) qui est induit par l'usure de l'élément de sculpture 10 avec lequel elle est entrée en contact, par rapport à une position de référence représentée à la Fig. 2 (les éléments de sculpture 10 n'étant pas usés).

On notera que ce déplacement relatif peut également correspondre à une mesure différentielle entre une position de la jauge 13 en contact avec le fond d'un sillon 12 (position de référence de la jauge 13) et une position de la jauge 13 en contact avec le sommet 11 de l'élément 10 (position de mesure).

L'unité de mesure 8 communique ensuite à l'unité centrale du véhicule, qui peut être interrogée par le conducteur, l'information d'usure correspondant à ce déplacement relatif.

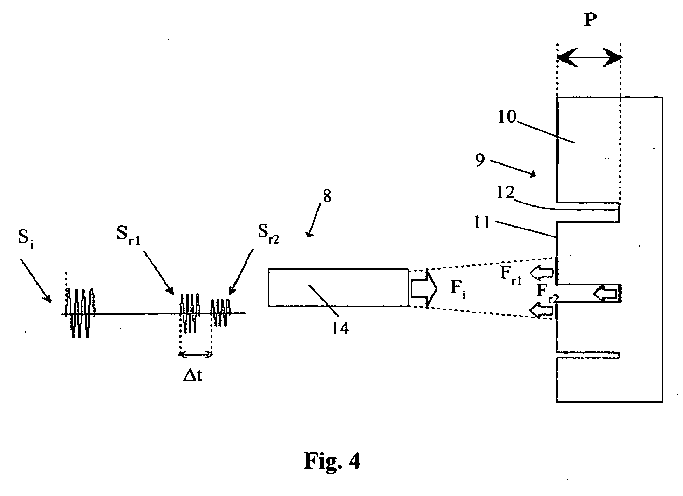

A la Fig. 4 est représentée schématiquement la partie de la bande de roulement 9 de l'enveloppe 2 qui se trouve en regard de l'unité de mesure 8 selon un second exemple de réalisation de l'invention, lors du roulage de l'enveloppe 2 sur un sol de roulage.

Comme on peut le voir à la Fig. 4, cette unité de mesure 8 comporte un capteur 14 prévu pour émettre à chaque instant des ultrasons sous la forme d'un faisceau incident Fᵢ à la fois en direction de l'un au moins des sillons 12 en regard et de l'un au moins des sommets 11 qui est adjacent à ce sillon 12.

Ce capteur 14 est pourvu de moyens (non représentés) pour réceptionner sous forme de signaux Sᵣ₁ et Sᵣ₂ respectivement, d'une part, un premier faisceau d'ultrasons Fᵣ₁ réfléchis par le sommet 11 en provenance du faisceau incident Fᵢ et, d'autre part, un second faisceau d'ultrasons Fᵣ₂ réfléchis ultérieurement par le fond du sillon 12 en provenance du même faisceau incident Fᵢ, pour déduire du décalage entre ces signaux Sᵣ₁ et Sᵣ₂ le temps de retard Δt du signal Sᵣ₂ par rapport au signal Sᵣ₁, et pour déduire de ce temps de retard Δt la distance entre le sommet 11 et le fond du sillon 12, c'est-à-dire la profondeur P ou hauteur de l'élément de sculpture 10 à chaque instant (voir les graphiques de la Fig. 4, avec également le signal émis Sᵢ correspondant au faisceau incident Fᵢ).

L'unité de mesure 8 de la Fig. 4 peut par exemple fonctionner de la manière suivante.

Afin de connaître en cours de roulage le degré d'usure d'une enveloppe 2 équipant son véhicule, le conducteur de ce véhicule actionne l'unité de mesure 8 pour que le capteur à ultrasons 14 émette le faisceau d'ultrasons Fᵢ en direction d'une zone prédéterminée de la bande de roulement 9 comprenant le sommet 11 et le sillon 12 précités. L'unité de mesure 8 procède à l'analyse des signaux réfléchis Sᵣ₁ et Sᵣ₂ et au calcul du temps de retard Δt, et communique à tout moment à l'unité centrale du véhicule les informations de profondeur P d'élément(s) de sculpture 10.

On notera qu'il est possible de procéder à des-moyennes dans le temps (par exemple sur un tour de roue) des profondeurs P d'usure qui ont été mesurées pour plusieurs éléments de sculpture 10 analysés par l'unité 8 au cours de la rotation de l'enveloppe 2. Pour que ces mesures soient représentatives du degré moyen de l'usure de l'enveloppe 2 sur toute sa circonférence, le conducteur peut avantageusement réduire la vitesse du véhicule.

On notera également qu'il est possible de régler préalablement à chaque mesure d'usure la position du capteur à ultrasons 15 par rapport à la direction axiale de l'enveloppe de pneumatique (voir la double flèche A de la Fig. 1), de telle sorte que le faisceau incident Fᵢ émis par ce dernier soit réfléchi par une zone donnée dont le degré d'usure est à évaluer sur la largeur de la bande de roulement 9.

## Revendications

1. Procédé de mesure de l'usure d'au moins une enveloppe de pneumatique (2) qui comporte une bande de roulement (9) comportant des éléments de sculpture (10) reliés entre eux par des sillons (12) et qui est montée sur une roue équipant un véhicule automobile, lequel comporte un châssis et un dispositif de suspension (1) assurant une liaison flexible entre ledit châssis et ladite roue, **caractérisé en ce qu'**il consiste, en roulage ou à l'arrêt dudit véhicule :
i) à effectuer à un instant donné une mesure d'une valeur représentative de la distance entre, d'une part, un premier point solidaire dudit dispositif de suspension (1) qui fait face à ladite enveloppe (2) et qui occupe une position ou une pluralité de positions telles que la projection orthogonale dudit premier point sur le plan circonférentiel médian (π) de ladite enveloppe (2) reste à égale distance de celle de l'axe (3) de ladite roue sur ledit plan (π), ou un second point solidaire dudit châssis qui fait face à ladite enveloppe (2), et, d'autre part, le sommet (11) de l'un au moins desdits éléments de sculpture (10) en regard dudit premier ou second point,
ii) soit, dans un premier cas, à effectuer audit instant donné une mesure d'une valeur de référence représentative d'une distance mesurée entre ledit premier ou second point et le fond de l'un desdits sillons (12) en regard dudit premier ou second point, soit, dans un second cas, à effectuer ultérieurement une mesure d'une autre valeur de référence représentative d'une distance mesurée entre ledit premier point et l'un desdits sommets (11), et
iii) à comparer la valeur mesurée au paragraphe i) à la valeur de référence mesurée au paragraphe ii) pour en déduire, dans ledit premier cas, une information d'usure représentative de la hauteur (P) dudit élément de sculpture (10) par mesure différentielle audit instant, et, dans ledit second cas, une information d'usure représentative de l'évolution de l'usure du sommet dudit élément (10) dans un intervalle de temps donné.

2. Procédé de mesure de l'usure selon la revendication 1, **caractérisé en ce qu'**il consiste :
i) à effectuer à un instant donné la mesure d'une valeur représentative de la distance entre ledit premier point solidaire dudit dispositif de suspension (1) et le sommet (11) de l'un au moins desdits éléments de sculpture (10) en regard dudit premier point,
ii) soit, dans un premier cas, à effectuer audit instant donné la mesure d'une valeur de référence représentative d'une distance mesurée entre ledit premier point et le fond de l'un desdits sillons (12) en regard dudit premier point, soit, dans un second cas, à effectuer ultérieurement la mesure d'une autre valeur de référence représentative d'une distance mesurée entre ledit premier point et l'un desdits sommets (11), et
iii) à comparer la valeur mesurée au paragraphe i) à la valeur de référence mesurée au paragraphe ii) pour en déduire, dans ledit premier cas, l'information d'usure représentative de la hauteur (P) dudit élément de sculpture (10) par mesure différentielle audit instant, et, dans ledit second cas, l'information d'usure représentative de l'évolution de l'usure du sommet (11) dudit élément (10) dans un intervalle de temps donné.

3. Procédé de mesure de l'usure selon la revendication 1, **caractérisé en ce qu'**il consiste :
i) à effectuer à un instant donné la mesure d'une valeur représentative de la distance entre ledit second point solidaire dudit châssis et le sommet (11) de l'un au moins desdits éléments de sculpture (10) en regard dudit second point,
ii) à effectuer audit instant donné la mesure d'une valeur de référence représentative d'une distance mesurée entre ledit second point et le fond de l'un desdits sillons (12) en regard dudit second point, et
iii) à comparer la valeur mesurée au paragraphe i) à la valeur de référence mesurée au paragraphe ii) pour en déduire l'information d'usure représentative de la hauteur (P) dudit élément de sculpture (10) par mesure différentielle audit instant.

4. Procédé de mesure de l'usure selon la revendication 1, **caractérisé en ce qu'**il consiste :
i) à effectuer à un instant donné une mesure d'une valeur représentative de la distance entre, d'une part, ledit premier point solidaire dudit dispositif de suspension (1) ou ledit second point solidaire dudit châssis et, d'autre part, le sommet (11) de l'un au moins desdits éléments de sculpture (10) en regard dudit premier ou second point,
ii) à effectuer audit instant donné une mesure de la valeur de référence représentative d'une distance mesurée entre ledit premier ou second point et le fond de l'un desdits sillons (12) en regard dudit premier ou second point, et
iii) à comparer la valeur mesurée au paragraphe i) à la valeur de référence mesurée au paragraphe ii) pour en déduire l'information d'usure représentative de la hauteur (P) dudit élément de sculpture (10) par mesure différentielle audit instant.

5. Procédé de mesure de l'usure selon la revendication 2, **caractérisé en ce qu'**il consiste à déplacer ledit premier point solidaire dudit dispositif de suspension (1) selon une direction perpendiculaire audit plan circonférentiel médian (π) de l'enveloppe (2), pour mesurer l'usure d'une pluralité d'éléments de sculpture (10) dans la direction axiale de ladite enveloppe (2).

6. Procédé de mesure de l'usure selon la revendication 2 ou 5, **caractérisé en ce que** ledit premier point est solidaire d'un bras de suspension (5) dudit dispositif de suspension (1).

7. Procédé de mesure de l'usure selon la revendication 6, **caractérisé en ce que** ledit premier point est solidaire d'une butée (7) sur laquelle prend appui un ressort amortisseur (6) dudit bras de suspension (5).

8. Procédé de mesure de l'usure selon une des revendications précédentes, **caractérisé en ce qu'**il consiste à mesurer lesdites valeurs représentatives de distances par l'intermédiaire d'une jauge d'usure (13), telle qu'une pige, qui est montée sur ledit premier ou second point, en commandant un déplacement de ladite jauge (13) qui est tel qu'elle entre en contact avec l'un desdits sommets (11) et/ou avec ledit fond (12), et **en ce qu'**il consiste alors à mesurer le déplacement de ladite jauge (13) et à comparer ledit déplacement à un déplacement de référence, pour en déduire une information d'usure du ou des éléments de sculpture (10).

9. Procédé de mesure de l'usure selon la revendication 4, **caractérisé en ce qu'**il consiste, à un ou à chaque instant, à :
- émettre à partir dudit premier ou second point un faisceau incident (Fᵢ) d'ondes acoustiques ou électromagnétiques en direction de l'un au moins desdits sillons (12) en regard et de l'un au moins desdits sommets (11) qui lui est adjacent,
- à réceptionner sous forme de signaux (Sᵣ₁ et Sᵣ₂), respectivement, d'une part, un premier faisceau d'ondes (Fᵣ₁) réfléchies par ledit sommet (11) en provenance dudit faisceau incident (Fᵢ) et, d'autre part, un second faisceau d'ondes (Fᵣ₂) réfléchies par ledit fond de sillon (12) en provenance dudit faisceau incident (Fᵢ),
- à déduire du décalage entre lesdits signaux (Sᵣ₁ et Sᵣ₂) le temps de retard (Δt) du signal (Sᵣ₂) correspondant audit second faisceau (Fᵣ₂) par rapport au signal (Sᵣ₁) correspondant audit premier faisceau, et
- à en déduire la distance (P) entre ledit sommet (11) et ledit fond de sillon (12) représentant la hauteur du ou des éléments de sculpture (10) audit ou à chaque instant.

10. Procédé de mesure de l'usure selon la revendication 9, **caractérisé en ce qu'**il consiste à utiliser pour lesdites ondes des ondes acoustiques, telles que des ultrasons.

11. Procédé de mesure de l'usure selon la revendication 4, **caractérisé en ce qu'**il consiste :
- à effectuer, d'une manière continue sur au moins une révolution de ladite enveloppe (2) lors du roulage dudit véhicule, d'une part, n mesures (n > 1) représentatives des distances entre ledit premier ou second point et les sommets (11) respectifs de plusieurs desdits éléments (10) en regard et, d'autre part, n mesures de référence représentatives des distances entre ledit premier ou second point et le fond des sillons (12) adjacents auxdits éléments (10),
- à effectuer n comparaisons entre ces mesures pour en déduire, par mesures différentielles, n informations instantanées d'usure représentatives de la hauteur (P) desdits éléments de sculpture (10), et
- à réaliser une moyenne de ces n informations instantanées d'usure pour en déduire une information relative à l'usure moyenne en roulage de ladite enveloppe (2) sur toute sa circonférence.

12. Unité de mesure de l'usure (8) pour la mise en oeuvre du procédé de mesure de l'usure selon une des revendications 1 à 11, ladite unité de mesure (8) étant destinée à équiper un véhicule automobile comportant un châssis et des roues pourvues chacune d'une enveloppe de pneumatique (2), laquelle comporte une bande de roulement (9) comportant des éléments de sculpture (10), et un dispositif de suspension (1) comportant un bras de suspension (5) destiné à assurer une liaison flexible entre ledit châssis et lesdites roues,
**caractérisée en ce que** ladite unité de mesure (3) comporte une jauge d'usure (13), telle qu'une pige, ladite jauge (13) étant destinée à être montée sur une butée fixe (7) dudit bras de suspension (5) sur laquelle prend appui un ressort amortisseur (6), de manière que ladite jauge (13) puisse entrer en contact avec le sommet (11) et/ou le fond de sillon (12) relatifs à l'un au moins desdits éléments de sculpture (10), sous la commande de moyens de commande également montés sur ledit dispositif de suspension (1), et **en ce que** ladite unité de mesure de l'usure (8) comporte en outre des moyens pour mesurer le déplacement de ladite jauge (13) et comparer ledit déplacement à un déplacement de référence, et pour en déduire une information d'usure dudit ou desdits éléments de sculpture (10).

13. Unité de mesure de l'usure (8) pour la mise en oeuvre du procédé de mesure de l'usure selon une des revendications 1 à 11, ladite unité de mesure étant destinée à équiper un véhicule automobile comportant un châssis et des roues pourvues chacune d'une enveloppe de pneumatique (2), laquelle comporte une bande de roulement (9) comportant des éléments de sculpture (10) reliés entre eux par des sillons (12), et un dispositif de suspension (1) comportant un bras de suspension (5) destiné à assurer une liaison flexible entre ledit châssis et lesdites roues,
**caractérisé en ce que** ladite unité de mesure de l'usure (8) comporte un capteur (14) d'ondes acoustiques ou électromagnétiques, telles que des ultrasons ou des ondes lumineuses, ledit capteur (14) étant destiné à être monté un regard desdits éléments de sculpture et étant prévu pour émettre à un ou chaque instant un faisceau incident (Fᵢ) desdites ondes en direction de l'un au moins desdits sillons (12) en regard et de l'un au moins desdits sommets (11) qui lui est adjacent, et **en ce que** ladite unité (8) comporte en outre des moyens :
- pour réceptionner sous forme de signaux (Sᵣ₁ et Sᵣ₂), respectivement, d'une part, un premier faisceau d'ondes (Fᵣ₁) réfléchies par ledit sommet (11) en provenance dudit faisceau incident (Fᵢ) et, d'autre part, un second faisceau d'ondes (Fᵣ₂) réfléchies par ledit fond de sillon (12) en provenance dudit faisceau incident (Fᵢ),
- pour déduire du décalage entre lesdits signaux (Sᵣ₁ et Sᵣ₂) le temps de retard (Δt) du signal (Sᵣ₂) correspondant audit second faisceau (Fᵣ₂) par rapport au signal (Sᵣ₁) correspondant audit premier faisceau (Fᵣ₁), et
- pour en déduire la distance (P) entre ledit sommet (11) et ledit fond de sillon (12) représentant la hauteur du ou des éléments de sculpture (10) audit ou à chaque instant.

14. Unité de mesure selon le revendication 13, dans laquelle le capteur (14) est destiné à être disposé sur une butée fixe (7) dudit bras de suspension(s) sur laquelle prend appui un ressort amortiseur.

15. Unité de mesure selon la revendication 13 dans laquelle le capteur (14) est destiné à être disposé une un point fixe de châssis dudit véhicule.

16. Unité de mesure (8) selon l'une des revendication 12 à 15, telle qu'elle est prévue pour coopérer avec une unité centrale disposée dans ledit véhicule et destinée à recevoir lesdites informations d'usure de l'une au moins desdites enveloppes (2) en provenance de ladite unité de mesure (8) et adaptée pour informer à chaque instant le conducteur du véhicule de l'usure de ladite enveloppe (2).

17. Utilisation d'une unitée de mesure (8) selon une des revendication 12 à 16, **caractérisé en ce que** l'une au moins desdites enveloppes (2) a tout ou partie de ses sommets (11) d'éléments de sculpture (10) et/ou de ses sillons (12) en forme de surfaces concaves, telles que des paraboloïdes de révolution.

## Claims

1. Method for measuring the wear of at least one tyre (2) comprising a tread (9) which has pattern elements (10) interconnected by grooves (12) and which is mounted on a wheel fitted to an automobile vehicle comprising a chassis and a suspension system (1) that provides a flexible link between the said chassis and the said wheel,
**characterised in that**
with the said vehicle rolling or at rest, it comprises the following steps:
i) at a given moment a value is measured, which is representative of the distance on the one hand between a first point fixed on the said suspension system (1) which is opposite the said tyre (2) and occupies a position or a plurality of positions such that the orthogonal projection of the said first point on the median circumferential plane (π) of the said tyre (2) remains an equal distance from that of the axis (3) of the said tyre (2) on the said plane (π), or a second point fixed on the said chassis opposite the said tyre (2) and, on the other hand, the top (11) of at least one of the said tread pattern elements (10) opposite the said first or second point,
ii) either, in a first case, at the said given moment a reference value is measured which is representative of a distance measured between the said first or second point and the bottom of one of the said grooves (12) opposite the said first or second point, or, in a second case, another reference value is measured subsequently, which is representative of a distance measured between the said first point and one of the said tops (11), and
iii) the value measured in paragraph i) is compared with the reference value measured in paragraph ii) and from this is deduced, in the said first case a wear datum representing the height (P) of the said pattern element (10) by differential measurement at the said moment, and, in the said second case a wear datum representing the change of wear at the top of the said element (10) within a given time interval.

2. Wear measurement method according to Claim 1,
**characterised in that**
it comprises the following steps:
i) at a given moment a value is measured, which is representative of the distance between the said first point fixed on the suspension system (1) and the top (11) of at least one of the said tread pattern elements (10) opposite the said first point,
ii) either, in a first case, at the said given moment a reference value is measured, which is representative of a distance measured between the said first point and the bottom of one of the said grooves (12) opposite the said first point, or, in a second case, another reference value is measured subsequently, which is representative of a distance measured between the said first point and one of the said tops (11), and
iii) the value measured in paragraph i) is compared with the reference value measured in paragraph ii) and from this is deduced, in the said first case the wear datum representing the height (P) of the said pattern element (10) by differential measurement at the said moment, and, in the second case, the wear datum representing the change of wear at the top (11) of the said element (10) within a given time interval.

3. Wear measurement method according to Claim 1,
**characterised in that**
it comprises the following steps:
i) at a given moment a value is measured, which is representative of the distance between the said second point fixed on the chassis and the top (11) of at least one of the said tread pattern elements (10) opposite the said second point,
ii) at the said given moment a reference value is measured, which is representative of a distance measured between the said second point and the bottom of one of the said grooves (12) opposite the said second point, and
iii) the value measured in paragraph i) is compared with the reference value measured in paragraph ii) and from this is deduced the wear datum representing the height (P) of the said pattern element (10) by differential measurement at the said moment.

4. Wear measurement method according to Claim 1,
**characterised in that**
it comprises the following steps:
i) at a given moment a value is measured, which is representative of the distance between, on the one hand, the said first point fixed on the said suspension system (1) or the said second point fixed on the said chassis and, on the other hand, the top (11) of at least one of the said tread pattern elements (10) opposite the said first or second point,
ii) at the said given moment a reference value is measured, which is representative of a distance measured between the said first or second point and the bottom of one of the said grooves (12) opposite the said first or second point, and
iii) the value measured in paragraph i) is compared with the reference value measured in paragraph ii) and from this is deduced the wear datum representing the height (P) of the said pattern element (10) by differential measurement at the said moment.

5. Wear measurement method according to Claim 2,
**characterised in that**
it comprises the following step of displacing the said first point fixed on the said suspension system (1) in a direction perpendicular to the said median circumferential plane (π) of the tyre (2), to measure the wear of a plurality of tread pattern elements (10) in the axial direction of the said tyre (2).

6. Wear measurement method according to Claims 2 or 5,
**characterised in that**
the said first point is attached to a suspension arm (5) of the said suspension system (1).

7. Wear measurement method according to Claim 6,
**characterised in that**
the said first point is attached to an abutment (7) against which rests a damper spring (6) of the said suspension arm (5).

8. Wear measurement method according to any of the preceding claims,
**characterised in that**
it comprises the following step of measuring the said values representative of distances by means of a wear gauge (13), such as a feeler, which is mounted on the said first or second point, by displacing the said gauge (13) so that it comes in contact with one of the said tops (11) and/or with the said groove bottom (12),
and **in that**
it then comprises the following step of measuring the displacement of the said gauge (13) and comparing this displacement with a reference displacement, to deduce therefrom a wear datum of the tread pattern element(s).

9. Wear measurement method according to Claim 4,
**characterised in that**
it comprises, at a given moment or at all times, the following steps:
- emission from the said first or second point of an incident beam (Fᵢ) of acoustic or electromagnetic waves towards at least one of the said grooves (12) opposite the point and towards at least one of the said tops (11) adjacent to the groove,
- reception in the form of signals (Sᵣ₁ and Sᵣ₂), respectively, on the one hand of a first beam of waves (Fᵣ₁) reflected by the said top (11) and originating from the said incident beam (Fᵢ) and, on the other hand, of a second beam of waves (Fᵣ₂) reflected by the said groove bottom (12) and originating from the said incident beam (Fᵢ),
- deduction from the shift between the said signals (Sᵣ₁ and Sᵣ₂) of the delay time (Δt) of the signal (Sᵣ₂) corresponding to the second beam (Fᵣ₂) relative to the signal (Sᵣ₁) corresponding to the first beam (Fᵣ₁), and
- deduction from this, of the distance (P) between the said top (11) and the said groove bottom (12) representing the height of the tread pattern element(s) (10) at the said moment or at all times.

10. Wear measurement method according to Claim 9,
**characterised in that**
it comprises the use of acoustic waves such as ultrasonic waves as the said waves.

11. Wear measurement method according to Claim 4,
**characterised in that**
it comprises the following steps:
- in a continuous manner over at least one revolution of the said tyre (2) while the said vehicle is rolling, on the one hand n measurements (n > 1) are made which are representative of the distance between the said first or second point and the respective tops (11) of several of the said elements (10) opposite the point, and on the other hand n reference measurements are made which are representative of the distances between the said first or second point and the bottom of grooves (12) adjacent to the said elements,
- n comparisons are made between these measurements and from these, by differential measurements, n instantaneous wear data are deduced which represent the height (P) of the said pattern elements (10), and
- an average of these n instantaneous wear data is formed, to deduce therefrom a datum relating to the average wear of the said tyre (2) around its entire circumference during rolling.

12. Wear measurement unit (8) for implementing the wear measurement method according to any of Claims 1 to 11, the said wear measurement unit (8) being designed for fitting on an automobile vehicle that comprises a chassis and wheels each provided with a tyre (2), the said tyres each having a tread (9) comprising tread pattern elements (10), and a suspension system (1) comprising a suspension arm (5) designed to provide a flexible link between the chassis and the wheels,
**characterised in that**
the said wear measurement unit (8) comprises a wear gauge (13), such as a feeler, this gauge (13) being configured to be mounted on a fixed abutment (7) of the said suspension arm (5) against which rests a damper spring (6), in such manner that the gauge (13) can make contact with the top (11) and/or the bottom of the groove (12) associated with at least one of the said tread pattern elements (10), under the control of control means also mounted on the said suspension system (1), and **in that** the said measurement unit (8) comprises means for measuring the displacement of the said gauge (13) and for comparing that displacement with a reference displacement, to deduce therefrom a wear datum relating to the said tread pattern element(s).

13. Wear measurement unit (8) for implementing the wear measurement method according to any of Claims 1 to 11, the said wear measurement unit (8) being designed for fitting on an automobile vehicle comprising a chassis and wheels each provided with a tyre (2), the said tyres each having a tread (9) comprising pattern elements (10) interconnected by grooves (12), and a suspension system (1) comprising a suspension arm (5) designed to provide a flexible link between the chassis and the wheels,
**characterised in that**
the wear measurement unit (8) comprises a pick-up (14) for acoustic or electromagnetic waves, such as ultrasonic or light waves, the said pick-up (14) being configured to be mounted opposite of said pattern elements (10) and being designed to emit, at a given moment or at all times, an incident beam (Fᵢ) of the said waves towards at least one of the said grooves (12) opposite it and towards at least one of the said tops (11) adjacent thereto, and **in that** the said unit (8) comprises in addition means:
- for receiving in the form of signals (Sᵣ₁ and Sᵣ₂), respectively, on the one hand a first beam (Fᵣ₁) of waves reflected by the said top (11) and originating from the said incident beam (Fᵢ) and, on the other hand, a second beam (Fᵣ₂) of waves reflected by the said groove bottom (12) and originating from the incident beam (Fᵢ),
- for deducing from then shift between the said signals (Sᵣ₁ and Sᵣ₂) the delay time (Δt) of the signal (Sᵣ₂) corresponding to the said second beam (Fᵣ₂) relative to the signal (Sᵣ₁) corresponding to the said first beam (Fᵣ₁), and
- for deducing therefrom the distance (P) between the said top (11) and the said groove bottom (12) representing the height of the tread pattern elements (10) at the said moment or at all times.

14. Wear measurement unit (8) according to claim 13, wherein the pick-up (14) is designed to be mounted on a fixed abutment (7) of the suspension arm (5) against which rests a damper spring (6).

15. Wear measurement unit (8) according to claim 13, wherein the pick-up (14) is designed to be mounted on a fixed point of the chassis of the vehicle.

16. Wear measurement unit (8) according to one of claims 13 to 15, wherein said unit is intended to cooperate with a central unit placed in said vehicle and is designed to receive the said wear data concerning at least one of the said tyres (2) from the said measurement unit (8), and is capable of informing the driver of the vehicle at any time about the wear of the said tyre (2).

17. Use of a wear measurement unit (8) according to one of claims 12 to 16, **characterized in that** at least one of the said tyres (2) has all or part of its tops (11) of tread pattern elements (10) and/or its grooves (12) in the form of concave surfaces, such as paraboloids of revolution.

## Patentansprüche

1. Verfahren zum Messen des Verschleißes wenigstens eines Luftreifenmantels (2), der eine Lauffläche (9) mit Profilelementen (10), die durch Furchen (12) miteinander verbunden sind, aufweist und an einem Rad eines Kraftfahrzeugs, das ein Fahrgestell und eine Aufhängungsvorrichtung (1), die eine flexible Verbindung zwischen dem Fahrgestell und dem Rad gewährleistet, enthält, montiert ist, **dadurch gekennzeichnet, dass** es beim Rollen oder im Stillstand des Fahrzeugs darin besteht:
i) zu einem gegebenen Zeitpunkt eine Messung eines Wertes vorzunehmen, der den Abstand zwischen einerseits einem ersten festen Punkt der Aufhängungsvorrichtung (1), der dem Mantel (2) zugewandt ist und eine Position oder mehrere Positionen belegt, derart, dass die orthogonale Projektion des ersten Punkts auf die Median-Umfangsebene (π) des Mantels (2) gleich dem Abstand hiervon zur Achse (3) des Rades in dieser Ebene (π) bleibt, oder einem zweiten festen Punkt des Fahrgestells, der dem Mantel (2) zugewandt ist, und andererseits dem Scheitel (11) wenigstens eines der Profilelemente (10) gegenüber dem ersten oder dem zweiten Punkt repräsentiert,
ii) entweder in einem ersten Fall zu dem gegebenen Zeitpunkt eine Messung eines Referenzwertes vorzunehmen, der einen Abstand, der zwischen dem ersten oder dem zweiten Punkt und dem Boden einer der Furchen (12) gegenüber dem ersten oder dem zweiten Punkt gemessen wird, repräsentiert, oder in einem zweiten Fall später eine Messung eines anderen Referenzwertes vorzunehmen, der einen Abstand repräsentiert, der zwischen dem ersten Punkt und einem der Scheitelpunkte (11) gemessen wird, und
iii) den im Abschnitt i) gemessenen Wert mit dem im Abschnitt ii) gemessenen Referenzwert zu vergleichen, um daraus im ersten Fall eine Verschleißinformation, die die Höhe (P) des Profilelements (10) repräsentiert, durch differentielle Messung zu diesem Zeitpunkt und im zweiten Fall eine Verschleißinformation, die die Entwicklung des Verschleißes des Scheitelpunkts des Elements (10) in einem gegebenen Zeitintervall repräsentiert, abzuleiten.

2. Verschleißmessverfahren nach Anspruch 1, **dadurch gekennzeichnet, dass** es darin besteht:
i) zu einem gegebenen Zeitpunkt die Messung eines Wertes vorzunehmen, der den Abstand zwischen dem ersten festen Punkt der Aufhängungsvorrichtung (1) und dem Scheitelpunkt (11) wenigstens eines der Profilelemente (10) gegenüber dem ersten Punkt repräsentiert,
ii) entweder in einem ersten Fall zu dem gegebenen Zeitpunkt die Messung eines Referenzwertes vorzunehmen, der einen gemessenen Abstand zwischen dem ersten Punkt und dem Boden einer der Furchen (12) gegenüber dem ersten Punkt repräsentiert, oder in einem zweiten Fall später die Messung eines anderen Referenzwertes vorzunehmen, der einen gemessenen Abstand zwischen dem ersten Punkt und einem der Scheitelpunkte (11) repräsentiert, und
iii) den im Abschnitt i) gemessenen Wert mit dem im Abschnitt ii) gemessenen Referenzwert zu vergleichen, um daraus im ersten Fall die Verschleißinformation, die die Höhe (P) des Profilelements (10) repräsentiert, durch differentielle Messung zu diesem Zeitpunkt und im zweiten Fall die Verschleißinformation, die die Entwicklung des Verschleißes des Scheitelpunkts (11) des Elements (10) in einem gegebenen Zeitintervall repräsentiert, abzuleiten.

3. Verschleißmessverfahren nach Anspruch 1, **dadurch gekennzeichnet, dass** es darin besteht:
i) zu einem gegebenen Zeitpunkt die Messung eines Wertes vorzunehmen, der den Abstand zwischen dem zweiten festen Punkt des Fahrgestells und dem Scheitelpunkt (11) wenigstens eines der Profilelemente (10) gegenüber dem zweiten Punkt repräsentiert,
ii) zu dem gegebenen Zeitpunkt die Messung eines Referenzwertes vorzunehmen, der einen gemessenen Abstand zwischen dem zweiten Punkt und dem Boden einer der Furchen (12) gegenüber dem zweiten Punkt repräsentiert, und
iii) den im Abschnitt i) gemessenen Wert mit dem im Abschnitt ii) gemessenen Referenzwert zu vergleichen, um daraus die Verschleißinformation, die die Höhe (P) des Profilelements (10) repräsentiert, durch differentielle Messung zu diesem gegebenen Zeitpunkt abzuleiten.

4. Verschleißmessverfahren nach Anspruch 1, **dadurch gekennzeichnet, dass** es darin besteht:
i) zu einem gegebenen Zeitpunkt eine Messung eines Wertes vorzunehmen, der den Abstand zwischen einerseits dem ersten festen Punkt der Aufhängungsvorrichtung (1) oder dem zweiten festen Punkt des Fahrgestells und andererseits dem Scheitelpunkt (11) wenigstens eines der Profilelemente (10) gegenüber dem ersten oder dem zweiten Punkt repräsentiert,
ii) zu dem gegebenen Zeitpunkt eine Messung des Referenzwertes vorzunehmen, der einen gemessenen Abstand zwischen dem ersten oder dem zweiten Punkt und dem Boden der einen der Furchen (12) gegenüber dem ersten oder dem zweiten Punkt repräsentiert, und
iii) den im Abschnitt i) gemessenen Wert mit dem im Abschnitt ii) gemessenen Referenzwert zu vergleichen, um daraus die Verschleißinformation, die die Höhe (P) des Profilelements (10) repräsentiert, durch differentielle Messung zu diesem Zeitpunkt abzuleiten.

5. Verschleißmessverfahren nach Anspruch 2, **dadurch gekennzeichnet, dass** es darin besteht, den ersten festen Punkt der Aufhängungsvorrichtung (1) in einer Richtung senkrecht zu der Median-Umfangsebene (π) des Mantels (2) zu verlagern, um den Verschleiß mehrerer Profilelemente (10) in axialer Richtung des Mantels (2) zu messen.

6. Verschleißmessverfahren nach Anspruch 2 oder 5, **dadurch gekennzeichnet, dass** der erste Punkt mit einem Aufhängungsarm (5) der Aufhängungsvorrichtung (1) fest verbunden ist.

7. Verschleißmessverfahren nach Anspruch 6, **dadurch gekennzeichnet, dass** der erste Punkt mit einem Anschlag (7) fest verbunden ist, an dem sich eine Stoßdämpferfeder (6) des Aufhängungsarms (5) abstützt.

8. Verschleißmessverfahren nach einem der vorhergehenden Ansprüche, **dadurch gekennzeichnet, dass** es darin besteht, die Werte, die Abstände repräsentieren, über eine Verschleißlehre (13) wie etwa ein Stichmaß, die an dem ersten oder dem zweiten Punkt angebracht ist, zu messen, indem eine Verlagerung der Lehre (13) gesteuert wird, die derart ist, dass sie mit einem der Scheitelpunkte (11) und/oder mit dem Boden (12) in Kontakt tritt, und dass es darin besteht, dann die Verlagerung der Lehre (13) zu messen und die Verlagerung mit einer Referenzverlagerung zu vergleichen, um daraus eine Verschleißinformation des oder der Profilelemente (10) abzuleiten.

9. Verschleißmessverfahren nach Anspruch 4, **dadurch gekennzeichnet, dass** es darin besteht, zu einem oder zu jedem Zeitpunkt:
- ausgehend von dem ersten oder dem zweiten Punkt ein einfallendes Bündel (Fᵢ) aus Schallwellen oder elektromagnetischen Wellen in Richtung der wenigstens einen der Furchen (12) gegenüber wenigstens einem der Scheitelpunkte (11), der zu ihr benachbart ist, auszusenden,
- in Form von Signalen (Sᵣ₁ und Sᵣ₂) einerseits ein erstes Wellenbündel (Fᵣ₁), das von dem Scheitelpunkt (11) reflektiert wird und von dem einfallenden Bündel (Fᵢ) stammt, und andererseits ein zweites Wellenbündel (Fᵣ₂), das von dem Boden der Furche (12) reflektiert wird und von dem einfallenden Bündel (Fᵢ) stammt, zu empfangen,
- aus der Verschiebung zwischen den Signalen (Sᵣ₁ und Sᵣ₂) die Verzögerungszeit (Δt) des Signals (Sᵣ₂), das dem zweiten Bündel (Fᵣ₂) entspricht, gegenüber dem Signal (Sᵣ₁), das dem ersten Bündel entspricht, abzuleiten und
- daraus den Abstand (P) zwischen dem Scheitelpunkt (11) und dem Boden der Furche (12), der die Höhe des oder der Profilelemente (10) zu dem oder zu jedem Zeitpunkt repräsentiert, abzuleiten.

10. Verschleißmessverfahren nach Anspruch 9, **dadurch gekennzeichnet, dass** es darin besteht, für die Wellen Schallwellen wie etwa Ultraschallwellen zu verwenden.

11. Verschleißmessverfahren nach Anspruch 4, **dadurch gekennzeichnet, dass** es darin besteht:
- kontinuierlich bei wenigstens einer Umdrehung des Mantels (2) während des Rollens des Fahrzeugs einerseits n Messungen (n > 1) vorzunehmen, die Abstände zwischen dem ersten oder dem zweiten Punkt und den jeweiligen Scheitelpunkten (11) von mehreren gegenüberliegenden Elementen (10) und andererseits n Referenzmessungen, die die Abstände zwischen dem ersten oder dem zweiten Punkt und dem Boden der Furchen (12), die zu den Elementen (10) benachbart sind, repräsentieren, vorzunehmen,
- n Vergleiche zwischen diesen Messungen vorzunehmen, um daraus durch differentielle Messungen n momentane Informationen des Verschleißes abzuleiten, die die Höhe (P) der Profilelemente (10) repräsentieren, und
- einen Mittelwert dieser n momentanen Informationen für den Verschleiß zu bilden, um daraus eine Information abzuleiten, die auf den mittleren Verschleiß beim Abrollen des Mantels (2) auf seinem gesamten Umfang bezogen ist.

12. Verschleißmesseinheit (8) für die Ausführung des Verschleißmessverfahrens nach einem der Ansprüche 1 bis 11, wobei die Messeinheit (8) dazu vorgesehen ist, ein Fahrzeug auszurüsten, das ein Fahrgestell und Räder enthält, die jeweils mit einem Luftreifenmantel (2) versehen sind, der eine Lauffläche (9) aufweist, die Profilelemente (10) enthält, und eine Aufhängungsvorrichtung (1) mit einem Aufhängungsarm (5), der dazu bestimmt ist, eine flexible Verbindung zwischen dem Fahrgestell und den Rädern zu gewährleisten, enthält,
**dadurch gekennzeichnet, dass** die Messeinheit (8) eine Verschleißlehre (13) wie etwa ein Stichmaß enthält, wobei die Lehre (13) dazu vorgesehen ist, an einem festen Anschlag (7) des Aufhängungsarms (5) angebracht zu werden, an dem sich eine Stoßdämpferfeder (6) abstützt, derart, dass die Lehre (13) unter der Steuerung von Steuermitteln, die ebenfalls an der Aufhängungsvorrichtung (1) angebracht sind, in einen Kontakt mit dem Scheitelpunkt (11) und/oder dem Boden der Furche (12), die zu dem wenigstens einen der Profilelemente (10) gehören, treten kann, und dass die Verschleißmesseinheit (8) außerdem Mittel enthält, um die Verlagerung der Lehre (13) zu messen und die Verlagerung mit einer Referenzverlagerung zu vergleichen und um daraus eine Information bezüglich des Verschleißes des oder der Profilelemente (10) abzuleiten.

13. Verschleißmesseinheit (8) für die Ausführung des Verschleißmessverfahrens nach einem der Ansprüche 1 bis 11, wobei die Messeinheit dazu vorgesehen ist, ein Kraftfahrzeug auszurüsten, das ein Fahrgestell und Räder enthält, wovon jedes mit einem Luftreifenmantel (2) versehen ist, der eine Lauffläche (9) mit Profilelementen (10), die durch Furchen (12) miteinander verbunden sind, aufweist, und eine Aufhängungsvorrichtung (1) mit einem Aufhängungsarm (5), der dazu vorgesehen ist, eine flexible Verbindung zwischen dem Fahrgestell und den Rädern zu gewährleisten, enthält,
**dadurch gekennzeichnet, dass** die Verschleißmesseinheit (8) einen Sensor (14) für Schallwellen oder elektromagnetische Wellen wie etwa Ultraschallwellen bzw. Lichtwellen enthält, wobei der Sensor (14) dazu vorgesehen ist, gegenüber den Profilelementen angebracht zu werden, und dazu vorgesehen ist, zu einem oder zu jedem Zeitpunkt ein einfallendes Bündel (Fᵢ) der Wellen in Richtung der wenigstens einen gegenüber befindlichen Furche (12) und des wenigstens einen der Scheitelpunkte (11), die hierzu benachbart sind, auszusenden, und dass die Einheit (8) außerdem Mittel enthält:
- um in Form von Signalen (Sᵣ₁ und Sᵣ₂) einerseits ein erstes Wellenbündel (Fᵣ₁), das von dem Scheitelpunkt (11) reflektiert wird und von dem einfallenden Bündel (Fᵢ) stammt, und andererseits ein zweites Wellenbündel (Fᵣ₂), das von dem Boden der Furche (12) reflektiert wird und von dem einfallenden Bündel (Fᵢ) stammt, zu empfangen,
- um aus der Verschiebung zwischen den Signalen (Sᵣ₁ und Sᵣ₂) die Verzögerungszeit (Δt) des Signals (Sᵣ₂), das dem zweiten Bündel (Fᵣ₂) entspricht, in Bezug auf das Signal (Sᵣ₁), das dem ersten Bündel (Fᵣ₁) entspricht, abzuleiten, und
- um daraus den Abstand (P) zwischen dem Scheitelpunkt (11) und dem Boden der Furche (12), der die Höhe des oder der Profilelemente (10) zu dem oder jedem Zeitpunkt repräsentiert, abzuleiten.

14. Messeinheit nach Anspruch 13, in der der Sensor (14) dazu vorgesehen ist, an einem festen Anschlag (7) des Aufhängungsarms (5) angeordnet zu werden, an dem sich eine Stoßdämpferfeder abstützt.

15. Messeinheit nach Anspruch 13, in der der Sensor (14) dazu vorgesehen ist, an einem festen Punkt des Fahrgestells des Fahrzeugs angebracht zu werden.

16. Messeinheit (8) nach einem der Ansprüche 12 bis 15, derart, dass sie dazu vorgesehen ist, um mit einer Zentraleinheit zusammenzuarbeiten, die in dem Fahrzeug angeordnet und dazu vorgesehen ist, die Informationen über den Verschleiß des wenigstens einen der Mäntel (2), die von der Messeinheit (8) stammen, zu empfangen, und dazu ausgelegt ist, zu jedem Zeitpunkt den Fahrer des Fahrzeugs über den Verschleiß des Mantels (2) zu informieren.

17. Verwendung einer Messeinheit (8) nach einem der Ansprüche 12 bis 16, **dadurch gekennzeichnet, dass** die Scheitelpunkte (11) von Profilelementen (10) und/oder die Furchen (12) des wenigstens einen der Mäntel (2) alle oder teilweise die Form konkaver Oberflächen wie etwa von rotationssymmetrischen Paraboloiden haben.
